# FASCICULE DE BREVET EUROPEEN

(11) **EP 2 043 310 B1**
(45) Date de publication et mention de la délivrance du brevet: **01.09.2010**
(21) Numéro de dépôt: 08165251.3
(22) Date de dépôt: 26.09.2008
(51) Int. Cl.: H04L 12/56

(54) **Communication d'une information de risque dans un réseau multi-domaine**
Übertragung einer Risikoinformation in einem Multi-Domain Netzwerk
Communication of a risk information in a multi-domain network

(30) Priorité: 28.09.2007 FR 0706846
(43) Date de publication de la demande: 01.04.2009
(73) Titulaire: Alcatel Lucent, 75008 Paris (FR)
(72) Inventeur: Douville, Richard, 78140 Velizy (FR)
(74) Mandataire: Shamsaei Far, Hassan

(56) Documents cités:
- EP-A- 1 675 326
- MIYAMURA T ET AL: "A disjoint path selection scheme based on enhanced shared risk link group management for multi-reliability service" 28 novembre 2005 (2005-11-28), GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, PAGE(S) 1879-1884 , XP010879583 ISBN: 0-7803-9414-3 * alinéa [0III] *

## Description

L'invention se rapporte au domaine du routage dans les réseaux multidomaines, en particulier avec des domaines qui sont sous la responsabilité de différents opérateurs.

La notion de partage du risque de défaillance est un concept important pour les problèmes de calcul de route. Le concept de groupe de partage de risque (SRG pour shared risk group) a été introduit pour identifier des ressources d'un réseau qui sont susceptibles d'être affectées collectivement et conjointement par un événement particulier, par exemple la défaillance d'un équipement présentant une relation fonctionelle avec toutes les ressources membres du groupe. Par exemple, dans un réseau optique, on peut définir un groupe de liens à partage de risque (SRLG pour shared risk link group) pour désigner toutes les fibres optiques qui sont localisées dans un même conduit physique, et qui partagent donc un risque de rupture en cas d'endommagement de ce conduit. Des groupes de partage de risque peuvent aussi être définis pour d'autres types de ressources du réseau (noeuds, liens) et d'autres types de risques partagés (localisation dans une même zone géographique, un même bâtiment, dépendance d'une même source d'alimentation électrique, etc.)

En pratique, l'appartenance d'une ressource à un groupe de partage de risque est marquée en associant un identifiant de groupe de partage de risque (SRG ID ou SRLG ID) à cette ressource. Une ressource, par exemple un noeud ou un lien, peut appartenir simultanément à plusieurs groupes de partage de risque. Les informations de partage de risque, à savoir les associations entre ressources physiques d'un réseau et les groupes de partage de risque définis dans ce réseau sont des informations relativement statiques qui peuvent être collectées dans les messages d'un protocole de routage intérieur (Interior Gateway Protocol) et stockées dans un base de données d'ingénierie de trafic pour être exploitées par un dispositif de calcul de route, notamment afin de calculer des routes disjointes. Par convention, un chemin de connexion est considéré « traverser un groupe de partage de risque » lorsque ce chemin de connexion utilise au moins une ressource associée à ce groupe de partage de risque. D'autres détails sur l'utilisation des SRLG peuvent être trouvés par exemple dans « Shared Risk Link Groups Inference and Processing », draft-papadimitriou-ccamp-srlg-processing-02, IETF, Juin 2003.

Un autre document décrivant l'état de l'art est le document EP 1 675 326.

Pour rendre possible leur gestion et leur fonctionnement, les grands réseaux modernes, par exemple l'Internet, sont structurés en domaines entre lesquels les échanges d'information sont soumis à certaines restrictions. Des exemples de domaines sont notamment les domaines de routage, les aires et les sous-aires des protocoles de routage IGP et les systèmes autonomes (AS) des protocoles de routage EGP. Ces restrictions ont à la fois des motivations fonctionnelles, par exemple préserver l'extensibilité du réseau et empêcher sa saturation, et des motivations administratives, par exemple préserver la confidentialité de certaines informations relatives au réseau d'un opérateur vis à vis des autres opérateurs. En particulier, les informations de partage de risque dans un réseau d'opérateur sont des données sensibles susceptibles de révéler des vulnérabilités, et qui doivent donc être convenablement protégées.

Avec le développement des plans de contrôle IP (Internet Protocol) basés sur les piles protocolaires MPLS et GMPLS, il est possible d'automatiser les calculs de route et les réservations de ressources pour établir des connexions (LSP pour label switched path) ayant des caractéristiques d'ingénierie de trafic contrôlées (en termes de bande passante, protection, etc.) à travers des réseaux multidomaines. Toutefois, du fait des restrictions imposées entre les domaines, le calcul de route inter-domaine reste un problème imparfaitement résolu, notamment lorsque des contraintes complexes doivent être satisfaites.

Un but de l'invention est de faciliter la détermination de routes disjointes dans un réseau multidomaine. Un autre but de l'invention est de permettre la détection d'un risque partagé entre des connexions d'une couche cliente imbriquées dans des connexions d'une couche serveur.

Pour cela, l'invention fournit un procédé pour communiquer une information de risque dans un réseau comportant une pluralité de domaines interconnectés au niveau de noeuds de bordure desdits domaines, caractérisé par les étapes consistant à :
déterminer un chemin de connexion dans un premier domaine, ledit chemin s'étendant entre un noeud de bordure du premier domaine connecté à un deuxième domaine et un noeud de destination,
déterminer un ensemble de groupes de partage de risque du premier domaine qui sont traversés par ledit chemin de connexion,
attribuer un code d'identification de partage de risque audit chemin de connexion, stocker, dans un dispositif de gestion des groupes de partage de risque associé au premier domaine, une structure de données associant ledit code d'identification de partage de risque avec ledit ensemble de groupes de partage de risque, et
transmettre au deuxième domaine des informations de route relatives audit chemin de connexion et des informations de risque, lesdites informations de risque comprenant ledit code d'identification de partage de risque et un identifiant du dispositif de gestion des groupes de partage de risque permettant d'interroger ledit dispositif pour exploiter ledit code d'identification de partage de risque.

L'attribution d'un code d'identification de partage de risque peut être effectuée localement dans le premier domaine. Ce code d'identification de partage de risque permet d'agréger l'information de partage de risque relative à la connexion, c'est à dire de donner une représentation abrégée de tout ou partie des groupes de partage de risque du premier domaine traversés par la connexion. Il en résulte une réduction du volume des données à communiquer, par rapport à une communication directe des groupes de partage de risque concernés.

De plus, alors que les groupes de partage de risque sont des informations ayant une corrélation forte avec l'organisation et la topologie des ressources du premier domaine, il est possible de générer le code d'identification de partage de risque de manière abstraite pour sensiblement supprimer cette corrélation. Ainsi, le code d'identification de partage de risque peut être communiqué à l'extérieur du premier domaine sans compromettre des informations sensibles relatives à l'organisation du premier domaine.

L'exploitation du code d'identification de partage de risque peut revêtir plusieurs formes, par exemple vérifier à partir de leurs codes d'identification de partage de risque que deux chemins sont SRG-disjoints (c'est-à-dire qu'il n'existe aucun groupe de partage de risque traversé par les deux chemins), ou déterminer un nouveau chemin qui satisfasse une contrainte de caractère disjoint, en spécifiant au moyen d'un ou plusieurs codes d'identification de partage de risque les ressources devant être exclues du nouveau chemin.

Les informations de route qui sont communiquées au deuxième domaine peuvent être plus ou moins développées selon les restrictions qui s'appliquent entre les deux domaines. Des informations relatives aux noeuds et liens traversés par le chemin à l'intérieur du premier domaine peuvent être communiquées ou non. Une possibilité pour communiquer ces informations de route en respectant les contraintes de confidentialité est d'utiliser un « path-key » comme décrit dans la proposition « Preserving Topology Confidentiality in Inter-Domain Path Computation Using a Key-Based Mechanism », R. Bradford et al., Internet Engineering Task Force, 1 er mai 2007.

Selon d'autres modes de réalisation avantageux, le procédé peut présenter une ou plusieurs des caractéristiques suivantes :
- la détermination du chemin de connexion est effectuée en réponse à la réception d'une requête de détermination de chemin provenant du deuxième domaine.
- la requête de détermination de chemin comporte des contraintes d'ingénierie de trafic et le chemin de connexion est déterminé pour satisfaire lesdites contraintes d'ingénierie de trafic.
- la requête de détermination de chemin est reçue dans un message de signalisation tendant à l'établissement d'une connexion entre ledit noeud de bordure du premier domaine et ledit noeud de destination et lesdites informations de route et informations de risque sont transmises dans un message de signalisation confirmant l'établissement de ladite connexion. Une telle requête est par exemple constituée d'un message RSVP-TE PATH comportant une route incomplète.
- la requête de détermination de chemin est reçue par un élément de calcul de chemin du premier domaine dans un message de requête du protocole PCEP et lesdites informations de route et informations de risque sont transmises par ledit élément de calcul de chemin du premier domaine dans un message de réponse du protocole PCEP. Ce mode de réalisation permet de déterminer le chemin de connexion avant d'établir la connexion.
- le noeud de destination est un autre noeud de bordure du premier domaine connecté au deuxième domaine. Dans ce cas, le procédé peut comporter en outre l'étape consistant à établir entre deux noeuds dudit deuxième domaine une connexion traversant ledit premier domaine le long dudit chemin de connexion. Ce mode de réalisation peut notamment servir à exploiter une couche de tranport pour faire une tunnel entre deux points d'un domaine client.
- le deuxième domaine appartient à une couche de réseau cliente comportant une pluralité de noeuds reliés à des liens de communication d'un type client et le premier domaine appartient à une couche de réseau serveur comportant une pluralité de noeuds reliés à des liens de communication d'un type serveur différent du type client, lesdites interfaces d'interconnexion entre le premier domaine et le deuxième domaine comportant des modules d'adaptation pour adapter des signaux du type serveur au type client et pour adapter des signaux du type client au type serveur. Dans un tel réseau multicouches, les technologies de transmission employées peuvent être par exemple IP, Ethernet, SONET/SDH, ATM, Frame Relay, photonique, WDM, etc.
- Le procédé comporte l'étape consistant à diffuser au moyen d'un protocole de routage intérieur du deuxième domaine, par exemple OSPF-TE ou IS-IS-TE, une annonce de lien se rapportant à une connexion établie entre deux noeuds dudit deuxième domaine, ladite connexion traversant ledit premier domaine le long dudit chemin de connexion, ladite annonce de lien incluant lesdites informations de risque.
- Le procédé comporte l'étape consistant à enregistrer dans une base de données de routage du deuxième domaine un lien établi entre deux noeuds dudit deuxième domaine, ledit lien correspondant à une connexion traversant ledit premier domaine le long dudit chemin de connexion, ledit enregistrement de lien incluant lesdites informations de risque.
- l'identifiant du dispositif de gestion des groupes de partage de risque inclut une adresse IP, par exemple IPv4 ou IPv6.
- le code d'identification de partage de risque et l'identifiant du dispositif de gestion des groupes de partage de risque sont transmis dans deux champs d'un même objet. Un tel formalisme permet de conserver l'association entre les deux données au cours des différents traitements protocolaires à effectuer.

L'invention fournit également un dispositif de gestion des groupes de partage de risque pour un réseau de communication, ledit dispositif comprenant :
un module de stockage de données pour stocker des informations de groupes de partage de risque relatives à un domaine de réseau attribué audit dispositif, lesdites informations comprenant des associations entre des ressources de communication appartenant audit domaine de réseau et des groupes de partage de risque,
un module de gestion de code d'identification de partage de risque apte à attribuer un code d'identification de partage de risque à un chemin de connexion dudit domaine de réseau, à déterminer un ensemble de groupes de partage de risque qui sont traversés par ledit chemin de connexion, et à engendrer une structure de données associant ledit code d'identification de partage de risque avec ledit ensemble de groupes de partage de risque du domaine,
un module d'exploitation apte à accéder à la structure de données engendrée par le module de gestion de code d'identification de partage de risque, pour traiter une requête d'exploitation comprenant ledit code d'identification de partage de risque, et des moyens de communication interdomaine aptes, d'une part, à communiquer à l'extérieur du domaine les codes d'identification de partage de risque attribués aux chemins de connexion du domaine de réseau et un identifiant du dispositif de gestion des groupes de partage de risque permettant de transmettre au dispositif des requêtes d'exploitation et, d'autre part, à recevoir un requête d'exploitation depuis l'extérieur du domaine et à transmettre une réponse à ladite requête d'exploitation.

L'invention fournit également un réseau de communication multidomaine comportant un premier domaine attribué à un dispositif de gestion des groupes de partage de risque précité et un élément de réseau disposé à l'extérieur dudit premier domaine, ledit élément de réseau comportant :
un module de communication pour transmettre dans des domaines dudit réseau des requêtes de détermination de chemin inter-domaine et pour recevoir depuis lesdits domaines du réseau des messages de réponse relatifs à des chemins de connexion correspondant auxdites requêtes, lesdits messages de réponse comprenant des informations de route et des informations de risque, lesdites informations de risque de certains des messages de réponse comprenant ledit identifiant du dispositif de gestion des groupes de partage de risque attribué au premier domaine et des codes d'identification de partage de risque associés,
un module d'analyse de partage de risque pour analyser lesdites informations de risque reçues et, en réponse à la détection dudit identifiant du dispositif de gestion des groupes de partage de risque pour deux chemins de connexion différents, transmettre audit dispositif de gestion des groupes de partage de risque une requête d'exploitation incluant les codes d'identification de partage de risque associés aux deux chemins de connexion pour déterminer un caractère disjoint ou non desdits chemins de connexion.

L'invention fournit également un procédé de calcul de route dans un réseau de communication multidomaine comportant un premier domaine attribué à un dispositif de gestion des groupes de partage de risque précité, comportant les étapes consistant à :
recevoir dans un deuxième domaine du réseau une requête de détermination de chemin provenant d'un autre domaine du réseau, dit domaine requérant, ladite requête tendant à déterminer un chemin de connexion dans ledit deuxième domaine, déterminer un chemin de connexion entre deux noeuds du deuxième domaine pour répondre à ladite requête,
déterminer qu'une portion du chemin de connexion entre les deux noeuds du deuxième domaine est située dans ledit premier domaine du réseau,
obtenir dudit dispositif de gestion des groupes de partage de risque des informations de risque comprenant un code d'identification de partage de risque attribué à la portion du chemin de connexion située dans le premier domaine et l'identifiant du dispositif de gestion des groupes de partage de risque,
et transmettre au domaine requérant une réponse à ladite requête comportant des informations de route relatives audit chemin de connexion et lesdites informations de risque.

Une idée à la base de l'invention est, dans chaque domaine de routage d'un réseau multidomaine, de masquer des groupes de partage de risque associés à un chemin par un code abstrait associé à un noeud de référence du domaine. Seul le noeud de référence d'un domaine est capable d'extraire les groupes associés aux codes, et il peut être contacté pour cela à une adresse de réseau qui est communiquée dans les autres domaines. Ainsi, une solution est proposée qui concilie détection des conflits de risque et confidentialité des groupes de partage de risque des domaines.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique fonctionnelle d'un réseau multidomaine dans lequel des modes de réalisation de l'invention peuvent être mis en oeuvre.
La figure 2 est un diagramme de flux des messages de signalisation RSVP-TE pouvant être mis en oeuvre dans le réseau de la figure 1 pour établir une connexion N11-N12.
La figure 3 est un diagramme de flux illustrant le fonctionnement d'un gestionnaire des groupes de partage de risque dans le réseau de la figure 1.
La figure 4 est une représentation d'un autre réseau multidomaine dans lequel des modes de réalisation de l'invention peuvent être mis en oeuvre.
La figure 5 est un diagramme de flux des messages de signalisation RSVP-TE pouvant être mis en oeuvre dans le réseau de la figure 4 pour établir une connexion N41-N52.
La figure 6 est un diagramme de flux des messages PCEP pouvant être mis en oeuvre dans le réseau de la figure 4 pour déterminer un chemin de connexion N41-N52.
La figure 7 représente un format d'objet pouvant être utilisé dans des modes de réalisation de l'invention.

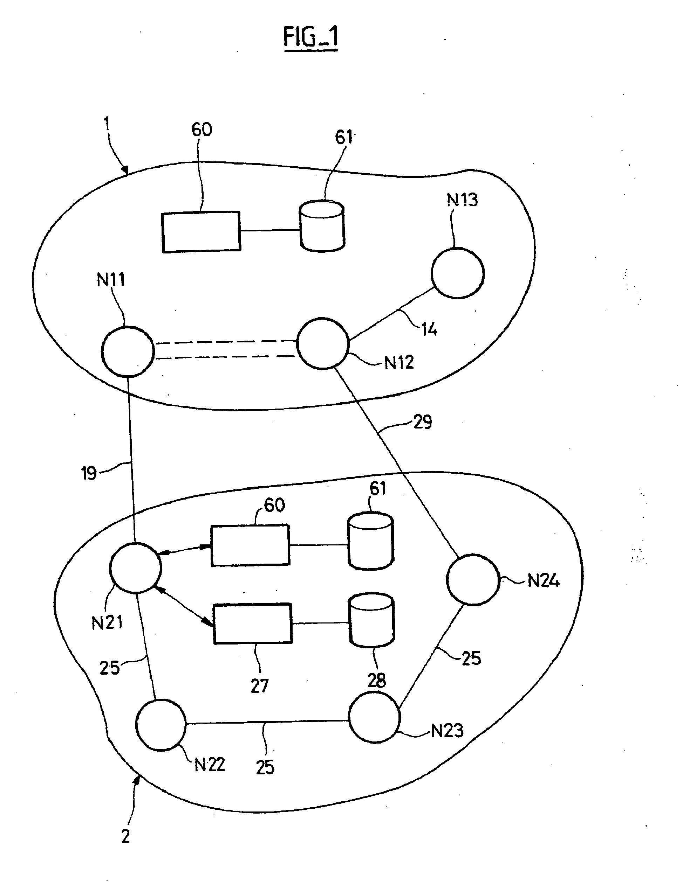

En référence à la figure 1, l'exemple de réseau de communication représenté comporte deux domaines de routage 1 et 2. Par domaine de routage, on entend généralement un ensemble d'éléments de réseau dans lequel la gestion des adresses ou le calcul des chemins est placé sous la responsabilité d'une entité commune, et notamment un réseau appartenant à un unique opérateur, un système autonome ou un groupe de systèmes autonomes, ou une aire ou un groupe d'aires d'un protocole IGP.

Le domaine 1 comporte trois noeuds N11, N12 et N13, par exemple des routeurs IP/MPLS. Un lien intra-domaine 14 relie les noeuds N12 et N13. Aucun lien intra-domaine ne relie les noeuds N11 et N12. Les noeuds N11 et N12 sont des routeurs de bord qui interconnectent le domaine 1 avec le domaine 2.

Le domaine 2 comporte quatre noeuds N21 à N24. Des liens intra-domaine 25 relient les noeuds N21 à N24. Les noeuds N21 et N24 sont des routeurs de bord qui interconnectent le domaine 2 avec le domaine 1. Un lien inter-domaine 19, respectivement 29, relie les noeuds N11 et N21, respectivement N12 et N24.

La technologie de transmission dans le domaine 2 peut être identique ou différente du domaine 1. Si les technologies de transmission sont différentes, les domaines 1 et 2 sont dits appartenir à deux couches de réseau différentes. Une pile protocolaire GMPLS peut être employée pour déployer un plan de contrôle unifiée sur des couches de réseau différentes.

Dans chaque domaine, il existe au moins un dispositif de calcul de chemin 60 qui accède au contenu d'une base de données d'ingénierie de traffic 61 pour calculer des chemins vérifiant des contraintes particulières à l'intérieur du domaine. Le dispositif de calcul de chemin 60 peut être intégré à un noeud, par exemple un routeur IP/MPLS, ou être réalisé séparément des noeuds, par exemple sous la forme d'un élément PCE (Path Computation Element). La base de données d'ingénierie de traffic 61 peut être configurée manuellement ou alimentée par une protocole de routage intérieur comme OSPF-TE ou IS-IS-TE. Selon un mode de réalisation GMPLS, la base de données d'ingénierie de traffic 61 comporte une base de données d'état des liens (Link State Database) et une base de données de liens à ingénierie de trafic (TE Link Database).

On suppose aussi que des groupes de partage de risque sont définis dans chaque domaine et que des identifiants SRLG ID sont attribuées aux différentes ressources (liens, noeuds, etc.). Ces attributions de groupes de partage de risque, qui sont relativement statiques, sont stockées de manière centralisée ou distribuée dans au moins un stockage de données du domaine, par exemple dans la base de données d'ingénierie de traffic 61.

Pour des raisons de sécurité ou d'administration, les informations de topologie, de connectivité et de groupes de partage de risque d'un domaine sont supposées être conservées dans ce domaine. Les domaines ont donc une visibilité limitée l'un sur l'autre. Par exemple, le domaine 1 ne connaît que les noeuds de bordure N21 et N24 du domaine 2 et les liens interdomaines correspondants 19 et 29.

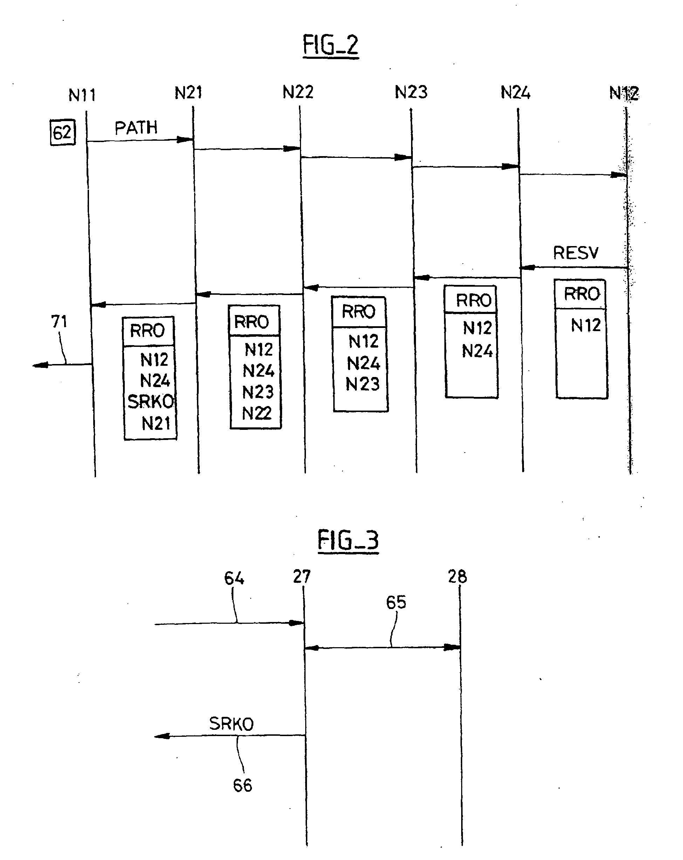

Supposons qu'une connexion entre N11 et N12 soit désirée dans le doamine 1. Le dispositif de calcul de route 60 du domaine 1 est capable de déterminer qu'une telle connexion peut être demandée au domaine 2. En référence à la figure 2, on décrit succinctement un procédé de signalisation RSVP-TE pouvant être mis en oeuvre pour établir cette connexion LSP (Label Switched Path).

Sur la figure 2, à l'étape 62, le noeud N11 envoie au noeud N21 un message de demande de connexion PATH comportant les caractéristiques de la connexion à établir (par exemple bande passante requise) et la destination N12. La route ne peut pas être complètement explicitée à ce stade par le domaine 1. Le message PATH comporte donc un chemin incomplet (loose hop) et un objet Record Route (RRO) pour demander l'enregistrement du chemin suivi, selon la technique connue. Le chemin de connexion devant être suivi dans le domaine 2 est déterminé à l'intérieur du domaine 2, soit par un calcul centralisé effectué par le noeud 21 ou un PCE, soit par des décisions successives des noeuds (routage saut par saut). On suppose que le chemin qui en résulte est N21-N22-N23-N24-N12. Le noeud N12 répond au message PATH par un message de réservation RESV dans lequel l'objet RRO est complété par les noeuds successifs pour informer le noeud initiateur N11 du chemin. Toutefois, comme le chemin traverse deux domaines, les sauts intermédiaires dans le domaine 2 ne sont pas nécessairement communiquées à N11 et peuvent remplacés par un code Path Key PKS, selon la technique connue.

Avant de transmettre le message RESV avec l'objet RRO au domaine 1, le noeud N21 y ajoute des informations de risque relatives aux ressources de communication du domaine 2 utilisées par la connexion. Pour cela, le domaine 2 comporte un gestionnaire des groupes de partage de risque 27, qui peut être réalisé de manière intégrée à un noeud ou à un PCE ou de manière séparée. Son fonctionnement est expliqué en référence à la figure 3.

Le gestionnaire 27 est chargé de plusieurs tâches. Il détermine quels groupes de partage de risque du domaine 2 qui sont traversés par la connexion. Pour cela, il utilise une description du chemin de connexion, fournie par exemple par le noeud 21 (Figure 3, l'étape 64). Puis il accède aux attributions de groupe de partage de risque (SRLG ID) des ressources, par exemple dans la base de données 61. Puis il attribue une ou plusieurs clés de partage de risque à la connexion (différentes des clés déjà attribuées par lui à d'autres connexions) et il enregistre, dans un stockage de données 28, une structure de données associant la ou les clés de partage de risque avec les groupes de partage de risque du domaine 2 qui sont traversés par la connexion (étape 65). Enfin, il retransmet au noeud 21 les informations de risque, dénotées SRK, devant être ajoutées au message RESV (étape 66). Ces informations sont la ou les clés de partage de risque et une adresse de réseau du gestionnaire 27, qui permet à des éléments situés dans d'autres domaines du réseau d'interroger le gestionnaire 27, comme il sera décrit plus bas. Le stockage de données 28 peut être éventuellement intégré à la base de données d'ingénierie de trafic 61 du domaine.

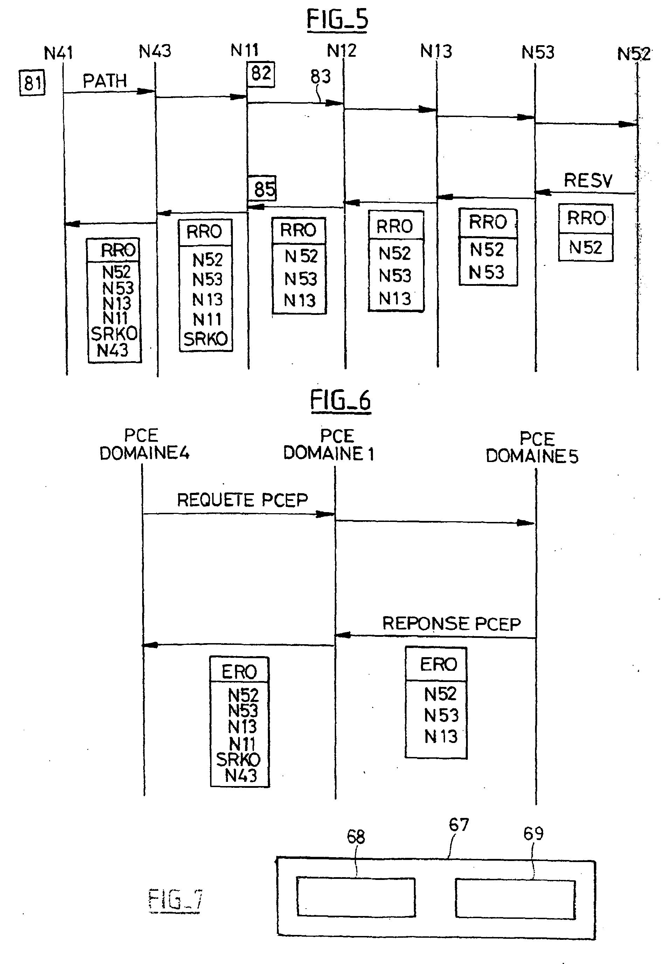

La figure 7 représente un format pouvant être utilisé pour transporter les informations de risque relatives à la connexion. Ce format consiste en un objet 67, dénommé par exemple SRKO pour Shared Risk Key, contenant un sous-objet 68 pour stocker l'adresse de réseau du gestionnaire 27et un sous-objet 69 pour stocker la ou les clés de partage de risque. Le sous-objet 68, dénommé par exemple Référence Node Address, peut être similaire à la section 4.1 du draft internet « draft-ietf-pce-disco-proto-ospf-08 ». Le sous-objet 69, dénommé par exemple SRLG, peut être conforme à la section 2.1 de la RFC4874.

De retour sur la figure 2, le noeud 11 reçoit donc un message de RESV dans lequel le RRO inclut l'objet SRKO. Un LSP 70 (Figure 1) est donc établi entre N11 et N12. Dans le domaine 1, le LSP 70 peut être considéré comme un lien virtuel entre le noeud d'entrée N11 et le noeud de sortie N12 et être utilisé comme un tunnel pour transporter des connexions ultérieures. Pour cela, à l'étape 71, le contrôleur de routage du noeud N11 diffuse un message d'annonce de lien dans le domaine 1, ce qui permet d'enregistrer ce lien virtuel dans la base de données 61 en association avec l'objet SRKO. Par exemple, le message d'annonce de lien peut être transmis avec le protocole OSPF-TE ou IS-IS-TE. Pour transporter l'objet SRKO, les mécanismes protocolaires existant pour transporter et stocker les SRLG ID peuvent être réutilisés, voir par exemple la section 5.2 du draft internet « draft-papadimitriou-ccamp-srlg-processing-02 », juin 2003.

La description précédente reste valide pour un LSP dont les extrémités ne seraient pas des noeuds de bordure du domaine 1.

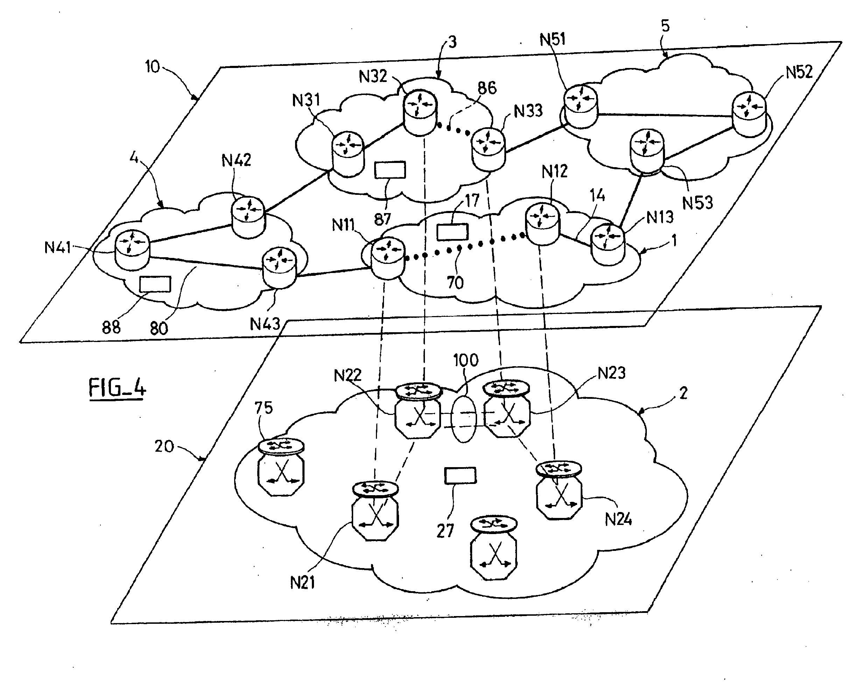

Dans la base de données 61 du domaine 1, il se peut qu'on ne stocke aucune information de route indiquant que le LSP 70 traverse le domaine 2, mais seulement les extrémités de la connexion. Toutefois, en gardant l'objet SRKO associé au LSP, il reste possible de détecter, dans le domaine 2 ou un autre domaine, des problèmes de partage de risque se produisant dans le domaine 1. Ce point va maintenant être illustré en référence à la figure 4.

La figure 4 représente un autre réseau multidomaine comportant des domaines 1 à 5. Les chiffres de références identiques à ceux de la figure 1 désignent des éléments identiques ou similaires. Dans cet exemple, les domaines 1, 3, 4 et 5 appartiennent à une couche de réseau 10, par exemple de type IP/MPLS, tandis que le domaine 2 appartient à une autre couche 20, par exemple une couche de transport de type SDH ou autre. Les noeuds N21 à N24 sont des noeuds multiservice reliés à la couche 10 et capable d'adapter les signaux aux deux technologies de transport. Dans la couche 20, des contrôleurs de noeuds 75 ont été représentés séparément pour chaque noeud, par exemple pour former un plan de contrôle GMPLS.

Sur la figure 4, on suppose que le noeud N41 du domaine 4 doit établir deux LSP disjoints en termes de risque pour relier le noeud N52 du domaine 5. Des chemins interdomaines disjoints peuvent être nécessaires par exemple pour des motifs de protection ou de répartition de charge. Comme les domaines n'ont qu'une visibilité limitée les uns sur les autres, il n'est en général pas possible de déterminer une route complète au niveau du domaine 5. II est donc généralement nécessaire de laisser plusieurs domaines calculer des portions successives du chemin. La figure 5 représente, à titre d'exemple, une procédure RSVP-TE pour établir un LSP 80 de cette manière.

Sur la figure 5, on suppose que le noeud N41 sait que le LSP doit partir vers le noeud N11 du domaine 1, par exemple grâce à des informations de connectivité interdomaine diffusées à l'échelle du réseau. A l'étape 81, le noeud N41 envoie au noeud N43 un message de demande de connexion PATH comportant les caractéristiques de la connexion à établir (par exemple bande passante requise) et la destination N52. Le message PATH comporte un objet Record Route (RRO) pour demander l'enregistrement du chemin suivi, selon la technique connue. Le message PATH atteint le noeud de bordure N11 du domaine 1, ce qui déclenche un calcul de chemin intradomaine dans le domaine 1 puisque le chemin n'est pas explicité (étape 82). Le résultat de ce calcul est par exemple de faire passer la connexion dans le LSP 70 jusqu'au noeud N12 et dans le lien 14 jusqu'au noeud N13. Le message PATH est donc transmis dans le tunnel 70 comme s'il s'agissait d'un seul saut (étape 83). Le message PATH atteint ensuite le noeud de bordure N53 du domaine 5 et enfin le noeud 52. De même qu'à la figure 2, le message RESV enregistre le chemin dans le sens inverse dans un objet RRO, mais certains sauts peuvent être masqués, par exemple le noeud N12 qui n'est pas un noeud de bordure. A l'étape 85, avant de transmettre le message RESV avec l'objet RRO au domaine 4, le noeud de bordure N11 y ajoute des informations de risque relatives aux ressources de communication du domaine 1 utilisées par la connexion. Pour cela, le noeud N11 peut faire appel à un gestionnaire des groupes de partage de risque 17 similaire au gestionnaire 27 du domaine 2. Le procédé décrit plus haut est donc répété, mais à partir des informations de groupes de partage de risque relatives aux ressources du domaine 1 pour former un objet SRKO propre au domaine 1. Dans les attributions de groupe de partage de risque, pour ce qui concerne le lien 70, le gestionnaire 17 rencontre l'objet SRKO qui a été reçu depuis le domaine 2 et stocké. Le gestionnaire 17 doit insérer cet objet sans modification dans l'objet RRO qui sort du domaine 1, ce qui permet de garder une information de risque signifiant indirectement que le domaine 2 est impliqué dans la connexion. Pour ce qui concerne les informations de route, le RRO ne contient normalement aucune indication relative au domaine 2 dans ce cas puisque le tunnel 70 est employé. Finalement, le message de réservation atteint le noeud initiateur N41 et le LSP 80 est donc établi.

Pour établir un deuxième LSP, si le domaine 4 n'a généralement pas assez d'information pour spécifier à l'avance un chemin disjoint du LSP 80, il dispose néanmoins des informations de connectivité interdomaine permettant de savoir qu'une route est susceptible d'exister à travers le domaine 3. Une démarche logique pour trouver un chemin disjoint serait donc de demander l'établissement du deuxième LSP à travers le domaine 3, en demandant d'exclure les noeuds des domaines 4 et 5 utilisés par le LSP 80. Toutefois, si le domaine 3 possède comme le domaine 1 un tunnel 86 dans le domaine 2, le résultat ne sera pas nécessairement un LSP disjoint en termes de risque, comme illustré par le LSP 90 sur la figure 4. En effet, un risque partagé existe sur le lien N22-N23, comme représenté au chiffre 100.

Toutefois, si l'établissement du LSP 90 suit une procédure similaire à celle décrite pour le LSP 80 et qu'un gestionnaire des groupes de partage de risque 87 est déployé de la même manière dans le domaine 3, ce risque partagé va pouvoir être détécté par le noeud 41. En effet, dans l'objet RRO du LSP 90, le noeud N41 reçoit aussi un objet SRKO émanant du gestionnaire 27 du domaine 1. Pour déterminer si les LSP 80 et 90 sont disjoints en termes de risques, le noeud N41 ou un autre élément de réseau du domaine 4 comporte un contrôleur d'analyse de partage de risque 88 qui compare les informations de risque disponibles relatives aux deux LSP. En comparant les deux objets SRKO, le contrôleur d'analyse va détecter la même adresse de gestionnaire dans les sous-objets 68. En réponse à cette détection, il transmet à cette adresse, c'est à dire au gestionnaire 27 du domaine 2, une requête de vérification du caractère disjoint dans laquelle il inclut les sous-objets 69, c'est à dire les clés de partage de risque des deux LSP.

En réponse à cette requête de vérification, le gestionnaire 27 développe les clés de partage de risque, c'est à dire qu'il extrait du stockage de données 28 les groupes de partage de risque du domaine 2 auxquels ces clés sont associées, et il peut ainsi déterminer si les clés renvoient à des groupes entièrement disjoints ou non. Un réponse correspondante, négative dans cet exemple, est transmise à l'émetteur de la requête de vérification.

Une autre utilisation possible de l'objet SRKO est de l'insérer dans un objet XRO (Exclude Route Object) du protocole RSVP-TE pour spécifier des groupes de partage de risque devant être évités par la connexion, par analogie avec la section 3.1.5 de la RFC4874, ou dans un objet ERO (Explicit Route Object) pour spécifier des groupes de partage de risque devant être traversés par la connexion.

Les communications d'informations de route et de risque entre les domaines, qui ont été décrites ci-dessus sous la forme de message de signalisation échangés par des contrôleurs de signalisation des noeuds, peuvent aussi être effectuées entre des éléments de calcul de chemin PCE attachés à chaque domaine et coopérant pour calculer une route interdomaine. Dans ce cas, le protocole PCEP est employé. Un objet SRKO peut être transporté dans un objet ERO, dans la réponse de chemin calculée par un ou une chaîne de PCE suite à une requête par le protocole PCEP. La figure 6 illustre un tel mode de réalisation dans un cas où le domaine 4 cherche à calculer une route interdomaine pour le LSP 80, avant de demander son l'établissement.

De préférence, un gestionnaire des groupes de partage de risque est associé à chaque domaine de routage du réseau. Il peut être prévu un gestionnaire par domaine de routage. Cependant, le domaine de responsabilité d'un gestionnaire des groupes de partage de risque peut aussi englober plusieurs domaines de routage, par exemple pour plusieurs opérateurs ayant un accord de coopération pour assurer cette fonctionnalité de manière commune.

Certains des éléments représentés ou décrits, notamment les contrôleurs, les gestionnaire des groupes de partage de risque et autres modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, le nombre et la topologie des liens, des noeuds, des domaines et des couches de réseau apparaissant sur les figures sont purement illustratifs et non limitatifs.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé pour communiquer une information de risque dans un réseau comportant une pluralité de domaines interconnectés au niveau de noeuds de bordure desdits domaines, comportant les étapes consistant à :
déterminer un chemin de connexion dans un premier domaine (2), ledit chemin s'étendant entre un noeud de bordure (N21) du premier domaine connecté à un deuxième domaine etun noeud de destination,
déterminer un ensemble de groupes de partage de risque du premier domaine qui sont traversés par ledit chemin de connexion,
attribuer un code d'identification de partage de risque (69) audit chemin de connexion,
stocker, dans un dispositif de gestion des groupes de partage de risque (28) associé au premier domaine, une structure de données associant ledit code d'identification de partage de risque avec ledit ensemble de groupes de partage de risque, et
transmettre au deuxième domaine des informations de route relatives audit chemin de connexion et des informations de risque, lesdites informations de risque comprenant ledit code d'identification de partage de risque (69),
**caractérisé par le fait que** ledit noeud de destination est un autre noeud de bordure (N24) du premier domaine connecté au deuxième domaine, le procédé comportant les étapes consistant à :
établir une connexion entre deux noeuds dudit deuxième domaine, ladite connexion traversant ledit premier domaine le long dudit chemin de connexion,
et enregistrer dans une base de données de routage du deuxième domaine un lien (70) correpondant à ladite connexion et apte à être utilisé comme un tunnel pour transporter des connexions ultérieures, ledit enregistrement de lien incluant lesdites informations de risque (68, 69), lesdites informations de risque comprenant aussi un identifiant du dispositif de gestion des groupes de partage de risque (68) permettant d'interroger ledit dispositif pour exploiter ledit code d'identification de partage de risque.

2. Procédé selon la revendication 1, **caractérisé par le fait que** la détermination du chemin de connexion est effectuée en réponse à la réception d'une requête de détermination de chemin provenant du deuxième domaine.

3. Procédé selon la revendication 2, **caractérisé par le fait que** ladite requête de détermination de chemin comporte des contraintes d'ingénierie de trafic et que le chemin de connexion est déterminé pour satisfaire lesdites contraintes d'ingénierie de trafic.

4. Procédé selon la revendication 2, **caractérisé par le fait que** ladite requête de détermination de chemin est reçue dans un message de signalisation (62) tendant à l'établissement d'une connexion entre ledit noeud de bordure du premier domaine et ledit noeud de destination et que lesdites informations de route et informations de risque sont transmises dans un message de signalisation confirmant l'établissement de ladite connexion.

5. Procédé selon la revendication 2, **caractérisé par le fait que** ladite requête de détermination de chemin est reçue par un élément de calcul de chemin du premier domaine dans un message de requête du protocole PCEP et que lesdites informations de route et informations de risque sont transmises par ledit élément de calcul de chemin du premier domaine dans un message de réponse du protocole PCEP.

6. Procédé selon la revendication 1, **caractérisé par le fait que** ladite connexion entre deux noeuds du deuxième domaine est une connexion de la couche cliente qui est imbriquée dans une connexion de la couche serveur.

7. Procédé selon la revendication 1, **caractérisé par le fait que** le deuxième domaine appartient à une couche de réseau cliente (10) comportant une pluralité de noeuds reliés à des liens de communication d'un type client et que le premier domaine (2) appartient à une couche de réseau serveur (20) comportant une pluralité de noeuds reliés à des liens de communication d'un type serveur différent du type client, lesdites interfaces d'interconnexion entre le premier domaine et le deuxième domaine comportant des modules d'adaptation pour adapter des signaux du type serveur au type client et pour adapter des signaux du type client au type serveur.

8. Procédé selon la revendication 1, **caractérisé par** l'étape consistant à diffuser (71) au moyen d'un protocole de routage intérieur du deuxième domaine une annonce de lien se rapportant à ladite connexion établie entre deux noeuds dudit deuxième domaine, ladite annonce de lien incluant lesdites informations de risque.

9. Procédé selon la revendication 1, **caractérisé par le fait que** l'identifiant du dispositif de gestion des groupes de partage de risque inclut une adresse IP.

10. Procédé selon la revendication 1, **caractérisé par le fait que** le code d'identification de partage de risque et l'identifiant du dispositif de gestion des groupes de partage de risque sont transmis dans deux champs d'un même objet.

11. Base de données d'ingénierie de traffic (61) pour un dispositif de calcul de chemin d'un deuxième domaine (1), **caractérisée par le fait qu'**elle comporte un enregistrement d'un lien (70) entre deux noeuds (N11, N12) dudit deuxième domaine, ledit lien correpondant à une connexion établie entre lesdits deux noeuds et traversant un premier domaine (2) le long d'un chemin de connexion, ledit lien étant apte à être utilisé comme un tunnel pour transporter des connexions ultérieures, ledit enregistrement de lien étant associé à des informations de risque comportant :
un code d'identification de partage de risque (69) attribué audit chemin de connexion du premier domaine (2) et
un identifiant d'un dispositif de gestion des groupes de partage de risque (68) associé au premier domaine (2), ledit dispositif de gestion des groupes de partage de risque (28) comportant une structure de données associant ledit code d'identification de partage de risque avec un ensemble de groupes de partage de risque qui sont traversés par ledit chemin de connexion du premier domaine (2).

12. Elément de calcul de chemin PCE pour calculer des chemins à l'intérieur d'un deuxième domaine (1), **caractérisé par le fait qu'**il est apte à avoir accès au contenu d'une base de données d'ingénierie de traffic (61) selon la revendication 11, ledit élément de calcul de chemin étant apte à :
calculer un chemin dans ledit deuxième domaine, ledit chemin passant par ledit lien traversant le premier domaine, et
employer le protocole PCEP pour transmettre une réponse de chemin à un autre domaine (4), ladite réponse de chemin comportant des informations de route et de risque relatives aux ressources de communication utilisées par ledit chemin dans le deuxième domaine, lesdites informations de risque comportant ledit code d'identification de partage de risque (69) et ledit identifiant du dispositif de gestion des groupes de partage de risque (68) associés à l'enregistrement de lien.

13. Contrôleur de routage pour un noeud de commutation (N11) d'un domaine (1), **caractérisé par le fait qu'**il est apte à avoir accès au contenu d'une base de données d'ingénierie de traffic (61) selon la revendication 11 et qu'il est apte à diffuser (71) au moyen d'un protocole de routage intérieur dudit deuxième domaine une annonce de lien se rapportant audit lien traversant le premier domaine, ladite annonce de lien incluant des informations de risque comportant ledit code d'identification de partage de risque (69) et ledit identifiant du dispositif de gestion des groupes de partage de risque (68) associés à l'enregistrement de lien.

14. Procédé pour établir une connexion interdomaine, **caractérisé par le fait qu'**il comporte les étapes consistant à :
recevoir un message de demande de connexion dans un deuxième domaine (1), ledit deuxième domaine (1) comportant une base de données d'ingénierie de traffic (61) selon la revendication 11 et un dispositif de calcul de chemin ayant accès à ladite base de données d'ingénierie de traffic, ledit message de demande de connexion provenant d'un autre domaine (4),
déterminer un chemin de connexion dans le deuxième domaine (1), ledit chemin passant par ledit lien (70) traversant le premier domaine enregistré dans la base de données d'ingénierie de traffic,
transmettre ledit message de demande de connexion dans le deuxième domaine (1) le long dudit chemin de connexion,
transmettre un message de réservation dans le deuxième domaine (1) le long dudit chemin de connexion en sens inverse dudit message de demande de connexion, et
transmettre ledit message de réservation vers ledit autre domaine (4), ledit message de réservation transmis vers ledit autre domaine comportant des informations de risque relatives aux ressources de communication utilisées par ledit chemin de connexion dans le deuxième domaine, lesdites informations de risque comportant, pour ce qui concerne ledit lien traversant le premier domaine, ledit code d'identification de partage de risque (69) et ledit identifiant du dispositif de gestion des groupes de partage de risque (68) associés à l'enregistrement de lien.

15. Procédé selon la revendication 14, **caractérisé par le fait que** les informations de risque sont transmises dans un objet Record Route du protocole RSVP-TE.

## Claims

1. A method for communicating risk information within a network including a plurality of domains connected to one another at the border nodes of said domains, comprising steps consisting of:
determining a connection path within a first domain (2), said path running between a border node (N21) of the first domain connected to a second domain and a destination node,
determining a set of shared risk groups of the first domain which said connection path crosses,
assigning a shared risk identification code (69) to said connection path, storing, within a shared risk group management device (28) associated with the first domain,
a data structure associating said shared risk identification code with said set of shared risk groups, and
sending to the second domain route information relating to said connection path and risk information, said risk information including said shared risk identification code (69),
**characterized in that** said destination node is another border node (N24) of the first domain connected to the second domain, the method comprising the steps consisting of:
establishing a connection between two nodes of said second domain, said connection crossing said first domain along said connection path,
and saving in a routing database of the second domain a link (70) corresponding to said connection and able to be used as a tunnel to transport subsequent connections, said saved link including said risk information (68, 69), said risk information also including an identifier of the shared risk group management device (68) allowing said device to be interrogated to exploit said shared risk identification code.

2. A method according to claim 1, **characterized in that** the determination of the connection path is performed in response to receiving a path determination request coming from the second domain.

3. A method according to claim 2, **characterized in that** said path determination request comprises traffic engineering restrictions, and **in that** the connection path is determined so as to satisfy said traffic engineering restrictions.

4. A method according to claim 2, **characterized in that** said path determination request is received within a signaling message (62) intended to establish a connection between said border node of the first domain and said destination node, and **in that** said route information and risk information is transmitted within a signaling message confirming the establishment of said connection.

5. A method according to claim 2, **characterized in that** said path determination request is received by a path computation element of the first domain within a request message of the PCEP protocol, and **in that** said route information and risk information is transmitted by said path computation element of the first domain within a response message of the PCEP protocol.

6. A method according to claim 1, **characterized in that** said connection between two nodes of the second domain is a client layer connection embedded within a server layer connection.

7. A method according to claim 1, **characterized in that** the second domain belongs to a client network layer (10) including a plurality of nodes connected to communication links of a client type, and that the first domain (2) belongs to a server network layer (20) including a plurality of nodes connected to communication links of a server type different to the client type, said interconnection interfaces between the first domain and the second domain including adjustment modules for adjusting signals of the server type to the client type and for adjusting signals of the client type to the server type.

8. A method according to claim 1, **characterized by** the step consisting of distributing (71), by means of an interior routing protocol of the second domain, a link announcement pertaining to said connection established between two nodes of said second domain, said link announcement including said risk information.

9. A method according to claim 1, **characterized in that** the shared risk group management device identifier includes an IP address.

10. A method according to claim 1, **characterized in that** the shared risk identification code and the shared risk group management device identifier are transmitted within two fields of the same object.

11. A traffic engineering database (61) for a path computation device of a second domain (1), **characterized in that** it comprises a saved link (70) between two nodes (N11, N12) of said second domain, said link corresponding to a connection established between said two nodes and crossing a first domain (2) along a connection path, said link being suitable for use as a tunnel to transport subsequent connections, said saved link being associated with risk information comprising:
a shared risk identification code (69) attributed to said connection path of the first domain (2) and
a shared risk group management device identifier (68) associated with the first domain (2), said shared risk group management device (28) comprising a data structure associating said shared risk identification code with a set of shared risk groups which are crossed by said connection path of the first domain (2).

12. A path computation element PCE for computing paths within a second domain (1), **characterized in that** it is capable of having access to the content of a traffic engineering database (61) according to claim 11, said path computation element being capable of:
computing a path within said second domain, said path passing via said link crossing the first domain, and
using the PCEP protocol to transmit a path response to another domain (4), said path response comprising route and risk information related to the communication resources used by said path in the second domain, said risk information comprising said shared risk identification code (69), and said shared risk group management device identifier (68) associated with the saved link.

13. A routing controller for a switching node (N11) of a domain (1), **characterized in that** it is capable of access to the content of a traffic engineering database (61) according to claim 11, and **in that** it is capable of distributing (71), by means of an interior routing protocol of said second domain, a link announcement pertaining to said link crossing the first domain, said link announcement including risk information comprising said shared risk identification code (69) and said shared risk group management device identifier (68) associated with the saved link.

14. A method for establishing an inter-domain connection, **characterized in that** it comprises steps consisting of:
receiving a connection request message within a second domain (1), said second domain (1) comprising a traffic engineering database (61) according to claim 11 and a path computation device having access to said traffic engineering database, said connection request message coming from another domain (4),
determining a connection path in the second domain (1), said path passing via said link (70) crossing the first domain saved in the traffic engineering database,
transmitting said connection request message in the second domain (1) along said connection path,
transmitting a reservation message within the second domain (1) along said connection path in the direction opposite that of said connection request message, and
transmitting said reservation message to said other domain (4), said reservation message transmitted to said other domain comprising risk information related to the communication resources used by said connection path in the second domain, said risk information comprising, with respect to said link crossing the first domain, said shared risk identification code (69) and said shared risk group management device identifier (68) associated with the saved link.

15. A method according to claim 14, **characterized in that** the risk information is transmitted within a Record Route object of the RSVP-TE protocol.

## Patentansprüche

1. Verfahren zum Übermitteln einer Risikoinformation in einem Netzwerk mit einer Mehrzahl von Domänen, welche auf Ebene der Randknoten der besagten Domänen verknüpft sind, wobei das Verfahren die folgenden Schritte umfasst:
Ermitteln eines Verbindungspfades in einer ersten Domäne (2), wobei sich der besagte Pfad zwischen einem Randknoten (N21) der ersten Domäne, welche mit einer zweiten Domäne verbunden ist, und einem Zielknoten erstreckt,
Ermitteln einer Gesamtheit von Risikoteilungsgruppen der ersten Domäne, welche von dem besagten Verbindungspfad durchquert werden,
Zuteilen eines Risikoteilungs-Identifikationscodes (69) an den besagten Verbindungspfad, Speichern, in einer der ersten Domäne zugeordneten Vorrichtung zur Verwaltung der Risikoteilungsgruppen (28), einer Datenstruktur, welche den besagten Risikoteilungs-Identifikationscode mit der besagten Gesamtheit von Risikoteilungsgruppen assoziiert, und
Übertragen von den besagten Verbindungspfad betreffenden Routeninformationen und Risikoinformationen an die zweite Domäne, wobei die besagten Risikoinformationen den besagten Risikoteilungs-Identifikationscode (69) enthalten,
**dadurch gekennzeichnet, dass** der besagte Zielknoten ein anderer Randknoten (N24) der mit der zweiten Domäne verbundenen ersten Domäne ist, wobei das Verfahren die folgenden Schritte umfasst:
Aufbauen einer Verbindung zwischen zwei Knoten der besagten zweiten Domäne, wobei die besagte Verbindung die erste Domäne entlang des besagten Verbindungspfades durchquert, und
Speichern, in einer Routing-Datenbank der zweiten Domäne, eines Links (70), welcher der besagten Verbindung entspricht und derart ausgelegt ist, dass er als Tunnel verwendet werden kann, um zukünftige Verbindungen zu transportieren, wobei das besagte Speichern des Links die besagten Risikoinformationen (68, 69) umfasst, wobei die besagten Risikoinformationen ebenfalls eine Kennung der Vorrichtung zur Verwaltung der Risikoteilungsgruppen (68) enthalten, welche es ermöglicht, die besagte Vorrichtung abzufragen, um den besagten Risikoteilungs-Identifikationscode auszuwerten.

2. Verfahren nach Anspruch 1, **dadurch gekennzeichnet, dass** das Ermitteln des Verbindungspfades in Antwort auf den Empfang einer von der zweiten Domäne kommenden Anforderung für die Ermittlung eines Pfades erfolgt.

3. Verfahren nach Anspruch 2, **dadurch gekennzeichnet, dass** die besagte Anforderung für die Ermittlung eines Pfades verkehrstechnische Kriterien enthält, und dass der Verbindungspfad unter Berücksichtigung der besagten verkehrstechnischen Kriterien ermittelt wird.

4. Verfahren nach Anspruch 2, **dadurch gekennzeichnet, dass** die besagte Anforderung für die Ermittlung eines Pfades in einer Signalisierungsnachricht (62) zum Aufbau einer Verbindung zwischen dem besagten Randknoten der ersten Domäne und dem besagten Zielknoten empfangen wird, und dass die besagten Routeninformationen und die besagten Risikoinformationen in einer Signalisierungsnachricht, welche den Aufbau der besagten Verbindung bestätigt, übertragen werden.

5. Verfahren nach Anspruch 2, **dadurch gekennzeichnet, dass** die besagte Anforderung für eine Pfadermittlung an einem Pfadberechnungselement der ersten Domäne in einer Anforderungsnachricht des PCEP-Protokolls empfangen wird, und dass die besagten Routeninformationen und die besagten Risikoinformationen von dem besagten Pfadberechnungselement der ersten Domäne in einer Antwortnachricht des PCEP-Protokolls übertragen werden.

6. Verfahren nach Anspruch 1, **dadurch gekennzeichnet, dass** die besagte Verbindung zwischen zwei Knoten der zweiten Domäne eine Verbindung der Client-Schicht ist, welche mit einer Verbindung der Server-Schicht verschachtelt ist.

7. Verfahren nach Anspruch 1, **dadurch gekennzeichnet, dass** die zweite Domäne einer Client-Netzwerkschicht (10) mit einer Mehrzahl von Knoten, welche mit Kommunikations-Links vom Typ Client verknüpft sind, angehört, und dass die erste Domäne (2) einer Server-Netzwerkschicht (20) mit einer Mehrzahl von Knoten, welche mit Kommunikations-Links vom Typ Server, der sich vom Client-Typ unterscheidet, angehört, wobei die besagten Verknüpfungsschnittstellen zwischen der ersten Domäne und der zweiten Domäne Anpassungsmodule umfassen, um Signale vom Typ Server an den Client-Typ und Signale vom Typ Client an den Server-Typ anzupassen.

8. Verfahren nach Anspruch 1, **gekennzeichnet durch** den Schritt, welcher darin besteht, anhand eines Routing-Protokolls innerhalb der zweiten Domäne eine Link-Anzeige, welche sich auf die besagte zwischen den zwei Knoten der besagten zweiten Domäne aufgebaute Verbindung bezieht, auszusenden (71), wobei die besagte Link-Anzeige die besagten Risikoinformationen enthält.

9. Verfahren nach Anspruch 1, **dadurch gekennzeichnet, dass** die Kennung der Vorrichtung zur Verwaltung der Risikoteilungsgruppen eine IP-Adresse enthält.

10. Verfahren nach Anspruch 1, **dadurch gekennzeichnet, dass** der Risikoteilungs-Identifikationscode und die Kennung der Vorrichtung zur Verwaltung der Risikoteilungsgruppen in zwei Feldern eines selben Objektes übertragen werden.

11. Datenbank für verkehrstechnische Daten (61) für eine Pfadberechnungsvorrichtung einer zweiten Domäne (1), **dadurch gekennzeichnet, dass** sie eine Erfassung eines Links (70) zwischen zwei Knoten (N11, N12) der besagten zweiten Domäne enthält, wobei der besagte Link einer zwischen den besagten zwei Knoten aufgebauten und eine erste Domäne (2) entlang eines Verbindungspfads durchquerenden Verbindung entspricht, wobei der besagte Link dazu ausgelegt ist, als Tunnel für den Transport zukünftiger Verbindungen verwendet zu werden, wobei die besagte Erfassung des Links mit Risikoinformationen assoziiert ist, welche enthalten:
Einen Risikoteilungs-Identifikationscode (69), welcher dem besagten Verbindungspfad der ersten Domäne (2) zugeordnet ist, und
eine Kennung einer Vorrichtung zur Verwaltung der Risikoteilungsgruppen (68), welche der ersten Domäne (2) zugeordnet ist, wobei die besagte Vorrichtung zur Verwaltung der Risikoteilungsgruppen (28) eine Datenstruktur enthält, welche den besagten Risikoteilungs-Identifikationscode mit einer Gesamtheit von Risikoteilungsgruppen, welche von dem besagten Verbindungspfad der ersten Domäne (2) durchquert werden, assoziiert.

12. Pfadberechnungselement PCE zum Berechnen von Pfaden innerhalb einer zweiten Domäne (1), **dadurch gekennzeichnet, dass** es für den Zugang zum Inhalt einer Datenbank für verkehrstechnische Daten (61) nach Anspruch 11 ausgelegt ist, wobei das besagte Pfadberechnungselement dazu ausgelegt ist:
Einen Pfad in der besagten zweiten Domäne zu berechnen, wobei der besagte Pfad über den besagten Link, welcher die erste Domäne durchquert, führt, und
das PCEP-Protokoll zu verwenden, um eine Pfadantwort an eine andere Domäne (4) zu übertragen, wobei die besagte Pfadantwort Routen- und Risikoinformationen, welche sich auf die von dem besagten Pfad in der zweiten Domäne benutzen Kommunikationsressourcen beziehen, enthält, wobei die besagten Risikoinformationen den besagten Risikoteilungs-Identifikationscode (69) und die besagte Kennung der Vorrichtung zur Verwaltung der Risikoteilungsgruppen (68), welche mit der Erfassung des Links assoziiert sind, enthalten.

13. Routing-Controller für einen Schaltknoten (N11) einer Domäne (1), **dadurch gekennzeichnet, dass** er für den Zugang zum Inhalt einer Datenbank für verkehrstechnische Daten (61) nach Anspruch 11 ausgelegt ist, und dass er dazu ausgelegt ist, anhand eines Routing-Protokolls innerhalb der besagten zweiten Domäne eine Link-Anzeige, welche sich auf den besagten Link, der die besagte erste Domäne durchquert, bezieht, auszusenden (71), wobei die besagte Link-Anzeige Risikoinformationen mit dem besagten Risikoteilungs-Identifikationscode (69) und der besagten Kennung der Vorrichtung zur Verwaltung der Risikoteilungsgruppen (68), welche mit der Erfassung des Links assoziiert sind, enthält.

14. Verfahren zum Aufbau einer Inter-Domänen-Verbindung, **dadurch gekennzeichnet, dass** es die folgenden Schritte umfasst:
Empfangen einer Verbindungsanforderungsnachricht in einer zweiten Domäne (1), wobei die besagte zweite Domäne (1) eine Datenbank für verkehrstechnische Daten (61) nach Anspruch 11 und eine Pfadberechnungsvorrichtung mit Zugang zu der besagten Datenbank für verkehrstechnische Daten umfasst, wobei die besagte Verbindungsanforderungsnachricht von einer anderen Domäne (4) stammt,
Ermitteln eines Verbindungspfades in der zweiten Domäne (1), wobei der besagte Pfad über den Link (70), welcher die in der Datenbank für verkehrstechnische Daten erfasste erste Domäne durchquert, führt,
Übertragen der besagten Verbindungsanforderungsnachricht in der zweiten Domäne (1) entlang des besagten Verbindungspfades,
Übertragen einer Reservierungsnachricht in der zweiten Domäne (1) entlang des besagten Verbindungspfades entgegen der Richtung der besagten Verbindungsanforderungsnachricht, und
Übertragen der besagten Reservierungsnachricht an die besagte andere Domäne (4), wobei die an die besagte andere Domäne übertragene Reservierungsnachricht Risikoinformationen, welche sich auf die von dem besagten Verbindungspfad in der zweiten Domäne benutzten Kommunikationsressourcen beziehen, enthält, wobei die Risikoinformationen in Bezug auf den besagten Link, welcher die erste Domäne durchquert, den besagten Risikoteilungs-Identifikationscode (69) und die besagte Kennung der Vorrichtung zur Verwaltung der Risikoteilungsgruppen (68), welche mit der Erfassung des Links assoziiert sind, umfassen.

15. Verfahren nach Anspruch 14, **dadurch gekennzeichnet, dass** die Risikoinformationen in einem Record-Route-Objekt des RSVP-TE-Protokolls übertragen werden.
